Europäisches Patentamt

(19) European Patent Office

Office européen des brevets

(11) Veröffentlichungsnummer: **0 246 339**
**B1**

(12) **EUROPÄISCHE PATENTSCHRIFT**

(45) Veröffentlichungstag der Patentschrift:
16.08.90

(21) Anmeldenummer: 86106771.8

(22) Anmeldetag: 17.05.86

(51) Int. Cl.⁵: **H04N 3/30,** H04N 3/233

(54) Digitales Schaltungssystem für (Farb)fernsehempfänger mit Kathodenstrahlbildröhren.

(43) Veröffentlichungstag der Anmeldung:
25.11.87 Patentblatt 87/48

(45) Bekanntmachung des Hinweises auf die Patenterteilung:
16.08.90 Patentblatt 90/33

(84) Benannte Vertragsstaaten:
DE FR NL

(56) Entgegenhaltungen:
EP-A- 0 162 123
DE-A- 2 808 224
DE-A- 3 136 029

ELECTRONIC ENGINEERING, Band 56, Nr. 689,
Mai 1984, Seiten 77-80, London, GB; A. HENNIGAN:
"Deflection processor eliminating tv hold controls"
IEEE TRANSACTIONS ON CONSUMER ELECTRONICS,
Band CE-31, Nr. 3, August 1985, Seiten 255-261, IEEE,
New York, US; U. KRAUS: "Symmetric line deflection for
colour tv receivers with enhanced picture quality"

(73) Patentinhaber: Deutsche ITT Industries GmbH,
Hans-Bunte-Strasse 19 Postfach 840,
D-7800 Freiburg(DE)

(72) Erfinder: Micic, Ljubomir, Dipl.-Ing., Sundgauallee 15,
D-7800 Freiburg i.Br.(DE)
Erfinder: Mehrgardt, Sönke, Dr. rer. nat.,
Häglestrasse 26, D-7806 March(DE)

ACTORUM AG

## Beschreibung

Seit wenigen Jahren hat sich in (Farb)fernsehempfängern die Digitalschaltungstechnik auch zur Signalverarbeitung des Empfangssignals und zur Erzeugung des für die Ablenkung des Kathodenstrahls erforderlichen Ablenksignals eingebürgert. Bei der Erforschung, Entwicklung und Realisierung dieser digitalen Schaltungssysteme ging man den von der seit langem üblichen analogen Signalverarbeitung vorgezeichneten Weg und löste die vorgegebenen und bekannten Einzelprobleme nicht mehr mittels Analogschaltungen, sondern Digitalschaltungen.

Demgegenüber liegt der Erfindung die Erkenntnis zugrunde, daß man sich auf dem Hintergrund der digitalen Signalverarbeitung in (Farb)fernsehempfängern von den durch die bisherige Analogtechnik festgelegten Zwängen, insbesondere hinsichtlich vorgegebener Signalverläufe und -kurvenformen, freimachen kann und dadurch nur schwierig zu lösende Probleme besser als mit der bisherigen Analog- und/oder Digitaltechnik in den Griff bekommen kann. Zu diesen schwierig zu lösenden Problemen gehören nach wie vor die durch den nichtsphärischen Bildröhrenschirm bedingten Geometrieverzerrungen bei der Wiedergabe, die sowohl bei der altbekannten Analogtechnik als auch bei der neueren Digitaltechnik einen erheblichen Lösungsaufwand erfordern; es sei nur an die Vielzahl von Tangens- und Ost-West-Korrekturschaltungen erinnert.

Die Beseitigung dieser Geometrieverzerrungen ist besonders dann dringlich, wenn von der starren Bindung an das bisher allgemein übliche Sägezahnablenksignal für die Horizontal- und die Vertikalablenkung, die jeweils einen im Vergleich zum Hinlauf sehr schnellen Rücklauf aufweisen, abgegangen wird und die einzelnen Pixels des Videosignals dann auf dem Bildröhrenschirm sichtbar werden zu lassen, wenn die beiden Ablenksignale den Kathodenstrahl an den senderseitig beabsichtigten Ort geführt haben, wobei zwischen dem Empfang und der Wiedergabe der einzelnen Pixels unterschiedliche Zeitintervalle liegen.

Die Ablenksignale werden bei diesem Verfahren nicht mehr von einem Sägezahlgenerator längst bekannter analoger oder neuerer digitaler Art erzeugt, sondern es ist ein Ablenkprozessor vorgesehen, der die Ablenksignale in frei wählbarer Kurvenform und Zeitabhängigkeit erzeugt, und zwar sowohl was die Horizontal- als auch die Vertikal-Ablenkung betrifft.

Derartige Ablenksysteme, die eine Wiedergabe des Bildinhalts beim horizontalen Hin- und Rücklauf ermöglichen, sind ansich bekannt, obgleich sie kaum verwendet werden. Ursache sind nämlich die schwer zu vermeidenden Bildverfälschungen, wenn der Hin- und der Rücklauf des bidirektional schreibenden Strahls nicht genau gleich sind. Es treten dann nämlich nicht nur die noch zu tolerierenden Geometrieverzerrungen, wie bei den üblichen Systemen, auf, sondern der ungleiche Hin- und Rücklauf führt zu einem Ausfransen vertikaler oder schräger Linien, oder zu einem alternierenden, zeilenabhängigen Bildversatz, was in beiden Fällen zu äußerst störenden Fehlern führt.

In DE-A 2 808 224 ist beispielsweise ein derartiges Ablenksystem für Fernsehempfänger beschrieben, das neben der spiegelbildlichen, dreiecksförmigen Horizontalablenktechnik mit bidirektionaler Bildwiedergabe während des Strahlhin- und des Strahlrücklaufs eine Korrektureinrichtung enthält, die bildröhrenbedingte Geometriefehler dadurch ausregelt, daß die jeweilige Sollposition des Bildpunktes über eine Magnetfeldmessung (= Hallsonde) der Horizontalablenkspule mit einem gespeicherten Sollwert verglichen wird und daß daraufhin die Strahlposition über einen Regelkreis nachregelt wird. Die Speicherung des analogen Videosignals erfolgt mittels zweier getakteter Schieberegister, die mit 10 MHz getaktet werden. Diese Taktfrequenz wird vom Zeilensynchronimpuls synchronisiert und steuert auch das Auslesen der in einem NUR-Lese-Speicher gespeicherten Sollposition der Bildpunkte.

In DE-A 3 136 029 ist eine Ablenkschaltung für eine ebenfalls bidirektionale Bildwiedergabe beschrieben, bei der die Videosignale analog oder digitalisiert in zwei Schieberegisteranordnungen gespeichert werden, wobei die Ausleserichtung gleich- und gegensinnig zur Einschreibrichtung ist. Die erforderliche Korrektur der Bildlage und der röhrenbedingten Geometriefehler erfolgt dadurch, daß der Auslesetakt der beiden Schieberegister mit einem Signal synchronisiert ist, das eine Information enthält, die die jeweilige Position des Elektronenstrahles auf dem Bildschirm angibt. Hierzu wird beispielsweise die Indexröhre als Wiedergabeeinrichtung angegeben, die zwischen den senkrecht verlaufenden Farbstreifen Sensorstreifen enthält, die dann ein Signal abgeben, wenn der Elektronenstrahl auf sie trifft.

Schließlich wird in "IEEE Transactions on Consumer Electronics", CE-31, August 1985, Nr. 3, S. 255–261 ein symmetrisches Ablenksystem für Farbfernsehsignale mit verbesserter Bildqualität beschrieben, bei dem die bidirektionale Zeilenschreibung zur Erhöhung der Zeilenfrequenz verwendet wird, um das Zeilenflimmern zu unterdrücken. Dabei wird zur gleichförmigen, spiegelbildlichen Zeilenwiedergabe auf dem flachen Bildschirm der Ablenkstrom sinusförmig verzerrt und die richtige Bildlage über den Nulldurchgangspunkt des Ablenkstromes mittels eines Phasenregelkreises nachgeregelt. Der Auslesetakt der gespeicherten Bildinformation ist dabei an die Höhe des jeweiligen Ablenkstromes gekoppelt, wobei der Auslesetakt je nach dem momentanen Bildwiedergabeort auf der Bildröhre höher oder niedriger als der gleichförmige Einschreibtakt ist.

Eine Kompensationsschaltung für digitalisierte Videosignale ist ferner in der Europäischen Patentanmeldung EP-A 0 162 123 beschrieben, vgl. auch die Oberbegriffe der selbständigen Ansprüche 1 und 2. Ein Ablenkprozessor erzeugt dabei die Ablenksignale für die Horizontal- und Vertikalablenkung. Wie üblich enthält dabei das Horizontal-Synchronisationssystem zwei Phasenregelkreise, deren erster auf das gesendete Horizontalsynchronsignal und deren zweiter auf das Flyback-Signal synchronisiert. Das mittels eines konstanten Taktsignals digitalisierte Videosignal wird in ein Random-Access-Speicher für die Dauer mindestens einer Zeile und/oder mindestens die Dauer eines Halbbildes eingeschrieben und so daraus ausgelesen, daß die einzelnen Pixels des Bildinhalts die zugehörigen, senderseitig beabsichtigten Orte auf dem Bildröhrenschirm einnehmen. Die Geometriekorrektur bei Bildwiedergabe erfolgt dabei im Gegensatz zu dem beispielsweise in DE-A 2 808 224 beschriebenen Verfahren nicht durch Korrektur der Ablenksignale, sondern durch Beeinflussung der zeitlichen Lage der digitalisierten Videosignale im Hinblick auf die gewünschte Korrektur, wobei nach einer Variante die Frequenz des Auslesetaktes gegenüber dem Einlesetakt modifiziert ist und nach einer anderen Variante der Ein- und der Auslesetakt zwar gleichfrequent sind, dabei jedoch die in den Speicher eingeschriebenen Videodaten so interpoliert sind, daß bei der Bildwiedergabe die Amplitude am Auftreffort des Elektronenstrahls auf dem Bildschirm den richtigen Bildeindruck erzeugt. Zur Geometriekorrektur wird also bei der zweiten Variante das Videosignal selbst modifiziert.

Es ist daher Aufgabe, der in den Ansprüchen gekennzeichneten Erfindung, ein digitales Schaltungssystem für (Farb)fernsehempfänger anzugeben, dessen an sich bekannte, lediglich auf den Bildinhalt gerichtete Korrektureinrichtung so modifiziert ist, daß eine Bildkorrektur auch bei einem an sich bekannten Ablenksystem mit Hin- und Rücklaufbildwiedergabe möglich ist, wobei die etwa gleichförmigen horizontalen Strahlbewegungen selbst nicht korrigiert sind.

Diese Aufgabe wird durch die Merkmale gemäß den beiden selbständigen Ansprüchen 1 und 2 gelöst. Die Erfindung wird nun anhand der Figuren der Zeichnung noch näher erläutert.

Fig. 1 zeigt ein stark schematisiertes Blockschaltbild eines Ausführungsbeispiels der Erfindung, und

Fig. 2 zeigt die Teilschaltung eines bevorzugten Ausführungsbeispiels der Erfindung.

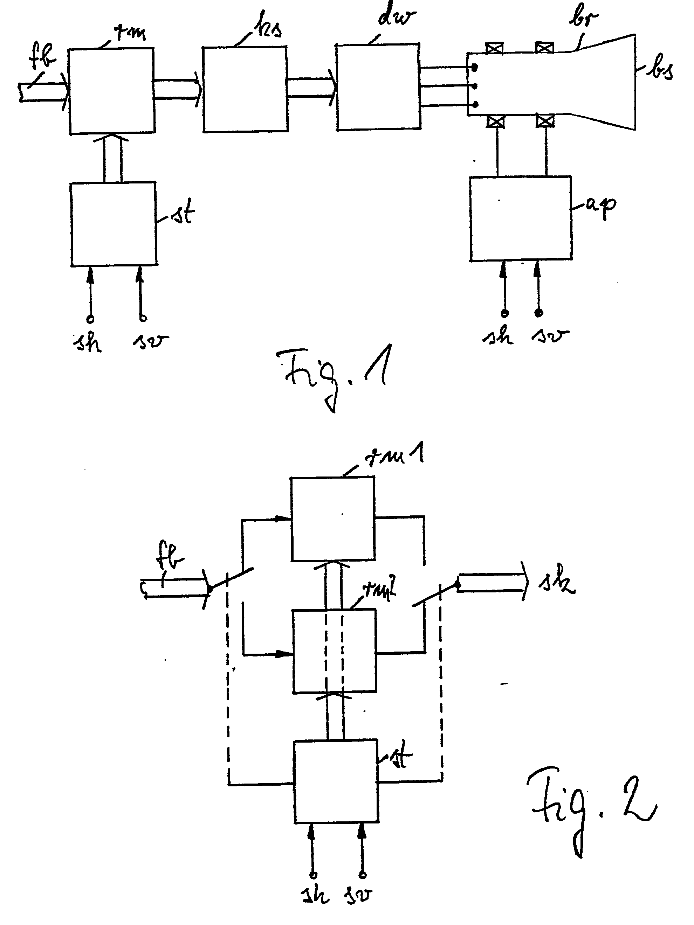

Im schematischen Schaltbild der Fig. 1 werden dem Horizontal- und dem Vertikal-Ablenksystem der Bildröhre br die Horizontal- bzw. Vertikalablenksignale zugeführt, die der Ablenkprozessor ap im oben angegebenen Sinne erzeugt. Hierzu benötigt er die Horizontal- und Vertikalsynchronsignale sh, sv die eine übliche Synchronsignalabtrennschaltung, die selbstverständlich auch in Digitaltechnik realisiert werden kann, aus dem empfangenen und demodulierten FBAS-Signal in üblicher Weise bildet. Das mittels eines Taktsignals digitalisierte Videosignal fb wird dem Random-Access-Speicher rm eingelesen, der mindestens eine Zeile und/oder mindestens ein Halbbild speichern kann. Diese gespeicherten Videosignale werden dann so aus dem Speicher rm ausgelesen, daß die einzelnen Pixels, wie bereits oben erwähnt wurde, die zugehörigen senderseitig beabsichtigten Orte auf dem Bildröhrenschirm bs einnehmen. Sowohl das Einschreiben als auch das Auslesen des Speichers rm geschieht unter Kontrolle der Speichersteuerung st, der ebenfalls wie dem Ablenkprozessor ap die Horizontal- und Vertikalsynchronsignale sh, sv zugeführt sind.

Dem Speicher rm ist die Kompensationsstufe ks zur Korrektur der Bildröhrenfehler nachgeschaltet, und die Bildröhre br ist über Digital-Analog-Wandler dw schließlich mit den korrekten Videosignalen angesteuert.

Nach einer bevorzugten Ausgestaltung der Erfindung wird der Speicher rm beim Hinlauf des Kathodenstrahls gleichsinnig, also sozusagen vorwärts, und bei dessen Rücklauf gegensinnig, also sozusagen rückwärts, zur Einschreibreihenfolge ausgelesen. Dies kann beispielsweise für die einzelnen Zeilen des Bildschirmbildes gelten; dann muß der Speicher rm Speicherplätze für mindestens zwei Zeilen haben. Aber auch für Halbbilder kann dies so sein; dann muß der Speicher rm mindestens zwei Halbbilder aufnehmen können.

Wird die eben erläuterte Ausgestaltung bei (Farb)fernsehempfängern mit einem Ablenkprozessor ap vorgesehen, der zwei Phasenregelkreise aufweist, deren erster auf das gesendete Horizontalsyncrhonsignal und deren zweiter auf das Flybacksignal syncrhonisiert, und sind die Horizontalablenksignale ferner Dreiecksignale, deren Frequenz gleich der Hälfte der Eingangshorizontalfrequenz ist, wobei die Vertikalablenksignale zeilenweise gestufte Sägezahnsignale sind, so besteht entsprechend einer bevorzugten Ausgestaltung der Erfindung der Random-Access-Speicher rm aus zwei Hälften rm1, rm2 für die Videosignale jeweils einer Zeile von zwei aufeinanderfolgenden Zeilen. Während des Horizontalhinlaufs werden die in der ersten Speicherhälfte rm1 während des vorhergehenden horizontalen Rücklaufs gespeicherten Videosignale vorwärts mit der Einlesefrequenz ausgelesen, und während eines horizontalen Rücklaufs werden die in der zweiten Speicherhälfte rm2 während des vorhergehenden horizontalen Hinlaufs gespeicherten Videosignale rückwärts mit der Einlesefrequenz ausgelesen. Dies ist in Fig. 2 mittels der von der Speichersteuerung st entsprechend umzuschaltenden beiden Umschalter angedeutet.

Schließlich ist bei dieser bevorzugten Ausgestaltung der erwähnte zweite Phasenregelkreis doppelt vorgesehen, und zwar je einmal für das Ablenksignal des Horizontalhinlaufs und das des Horizontalrücklaufs. Jeder dieser beiden zweiten Phasenregelkreise erhält ein eigenes Flybacksignal zugeführt, das ein aus der Schaltverzögerung jeweils eines bei der "rechten" bzw. "linken" Ablenkrichtungsumkehr zu sperrenden Transistors abgeleitet ist. Bei diesen Transistoren handelt es sich um die üblichen Endtransistoren der Ablenk-Leistungs-Endstufe, die bekanntlich bei Stromfluß im Basis-Sättigungsgebiet betrieben werden, so daß sie beim Übergang in den Sperrzustand das Eingangs-Sperrsignal nicht sofort zum Ausgang durchschalten, sondern erst, wenn die während des Sättigungszustandes im Basisgebiet gespeicherten überschüssigen Ladungsträger ausgeräumt worden sind.

Die eben erwähnte bevorzugte Ausführungsform kann noch so abgewandelt werden, daß die Frequenz der Dreiecksignale gleich der Eingangshorizontalfrequenz ist. Dann werden die in der ersten Speicherhälfte rm1 während der vorhergehenden Zeile gespeicherten Videosignale in einer empfangenen ungeraden Zeile zunächst vorwärts und sofort anschließend rückwärts jeweils mit der doppelten Einlesefrequenz ausgelesen. Ferner werden die in der zweiten Speicherhälfte rm2 während der vorhergehenden Zeile gespeicherten Videosignale in einer empfangenen geraden Zeile zunächst vorwärts und sofort anschließend rückwärts jeweils mit der doppelten Einlesefrequenz ausgelesen. Auch hier ist der zweite Phasenregelkreis doppelt vorzusehen und jedem das oben bereits erwähnte eigene Flybacksignal zuzuführen.

Die Realisierung der einzelnen Teilschaltungen der Erfindung geschieht selbstverständlich mittels integrierter Digitalschaltungen, wobei insbesondere MOS-Schaltungen geeignet sind.

## Patentansprüche

1. Digitales Schaltungssystem für (Farb)Fernsehempfänger mit Kathodenstrahl-Bildröhren (br)
- mit einem Ablenkprozessor (ap), der zur Erzeugung von Ablenksignalen zwei Phasenregelkreise enthält, deren erster auf das gesendete Horizontalsynchronsignal und deren zweiter auf das Flyback-Signal synchronisiert,
- das mittels eines Taktsignals digitalisierte Videosignal (fb) wird einem Random-Access-Speicher (rm) für mindestens eine Zeile und/oder mindestens ein Halbbild unter Kontrolle einer Speichersteuerung (st) eingeschrieben und so daraus ausgelesen, daß die einzelnen Pixels des Bildinhalts die zugehörigen, senderseitig beabsichtigten Orte auf dem Bildröhrenschirm (bs) einnehmen, und
- die aus dem Random-Access-Speicher (rm) ausgelesenen Digitalsignale sind zur Korrektur der Bildröhrenfehler einer Kompensationsstufe (ks) zugeführt, die ihrerseits über Digital-Analog-Wandler (dw) die Bildröhre (br) ansteuert, gekennzeichnet durch folgende Merkmale:
- der Ablenkprozessor erzeugt derartige Ablenksignale, daß der Bildinhalt des Empfangssignals bei allen Kathodenstrahlbewegungen auf dem Bildröhrenschirm (bs) sichtbar ist,
- der Random-Access-Speicher (rm) wird beim Hinlauf gleichsinnig (= "vorwärts") und beim Rücklauf gegensinnig (= "rückwärts") zur Einschreibreihenfolge ausgelesen,
- die Horizontalablenksignale sind Dreiecksignale, deren Frequenz gleich der Hälfte der Eingangshorizontalfrequenz ist, und die Vertikalablenksignale sind zeilenweise gestufte Sägezahnsignale,
- der Random-Access-Speicher (rm) hat zwei Hälften (rm1, rm2) für die Videosignale jeweils einer Zeile von zwei aufeinanderfolgenden Zeilen,
- während eines Horizontalhinlaufs werden die in der ersten Speicherhälfte (rm1) während des vorhergehenden Horizontalrücklaufs gespeicherten Videosignale vorwärts mit der Einlesefrequenz ausgelesen,
- während eines Horizontalrücklaufs werden die in der zweiten Speicherhälfte (rm2) während des vorhergehenden Horizontalhinlaufs gespeicherten Videosignale rückwärts mit der Einlesefrequenz ausgelesen, und
- der zweite Phasenregelkreis ist doppelt, zum einen für den Horizontalhinlauf und zum anderen für den Horizontalrücklauf, vorhanden, wobei als Flyback-Signal jeweils ein aus der Schaltverzögerung eines bei der Ablenkrichtungumkehrend zu sperrenden Transistors abgeleitetes Signal dient.

2. Digitales Schaltungssystem für (Farb)fernsehempfänger mit Kathodenstrahl-Bildröhren (br)
- mit einem Ablenkprozessor (ap), der zur Erzeugung von Ablenksignalen zwei Phasenregelkreise enthält, deren erster auf das gesendete Horizontalsynchronsignal und deren zweiter auf das Flyback-Signal synchronisiert,
- das mittels eines Taktsignals digitalisierte Videosignal (fb) wird einem Random-Access-Speicher (rm) für mindestens eine Zeile und/oder mindestens ein Halbbild unter Kontrolle einer Speichersteuerung (st) eingeschrieben und so daraus ausgelesen, daß die einzelnen Pixels des Bildinhalts die zugehörigen, senderseitig beabsichtigten Orte auf dem Bildröhrenschirm (bs) einnehmen, und
- die aus dem Random-Access-Speicher (rm) ausgelesenen Digitalsignale sind zur Korrektur der Bildröhrenfehler einer Kompensationsstufe (ks) zugeführt, die ihrerseits über Digital-Analog-Wandler (dw) die Bildröhre (br) ansteuert, gekennzeichnet durch folgende Merkmale:
- der Ablenkprosessor erzeugt derartige Ablenksignale, daß der Bildinhalt des Empfangssignals bei allen Kathodenstrahlbewegungen auf dem Bildröhrenschirm (bs) sichtbar ist, ·
- der Random-Access-Speicher (rm) wird beim Einlauf gleichsinnig (= "vorwärts") und beim Rücklauf gegensinnig (= "rückwärts") zur Einschreibreihenfolge ausgelesen,
- die Horizontalablenksignale sind Dreiecksignale, deren Frequenz gleich der Eingangshorizontalfrequenz ist, und die Vertikalablenksignale sind zeilenweise gestufte Sägezahnsignale,
- der Random-Access-Speicher (rm) hat zwei Hälften (rm1, rm2) für die Videosignale jeweils einer Zeile von zwei aufeinanderfolgenden Zeilen,
- während einer empfangenen ungeraden Zeile werden die in der ersten Speicherhälfte (rm1) während der vorhergehenden Zeile gespeicherten Videosignale vorwärts und anschließend rückwärts jeweils mit der doppelten Einlesefrequenz ausgelesen,
- während einer empfangenen geraden Zeile werden die in der zweiten Speicherhälfte (rm2) während der vorhergehenden Zeile gespeicherten Videosignale vorwärts und anschließend rückwärts jeweils mit der doppelten Einlesefrequenz ausgelesen, und
- der zweite Phasenregelkreis ist doppelt, zum einen für den Horizontalhinlauf und zum anderen für den Horizontalrücklauf, vorhanden, wobei als Flyback-Signal jeweils ein aus der Schaltverzögerung jeweils eines bei der Ablenkrichtungsumkehr zu sperrenden Transistors abgeleitete Signal dient.

## Claims

1. Digital circuit system for (color) television receivers with cathode-ray picture tubes (br)
   – comprising a deflection processor (ap) containing two phase-locked loops for generating deflection signals, the first of said phase-locked loops synchronizing with the transmitted horizontal synchronizing signal, and the second synchronizing with the flyback signal,
   – the video signal (fb), digitized by means of a clock signal, is written into a random-access memory (rm) capable of storing at least one line and/or at least field, and read therefrom in such a way that the individual pixels of the picture occupy those positions on the picture-tube screen (bs) which are intended at the transmitting end, both the write-in and the readout being performed under control of a memory controller (st), and
   – to correct picture-tube errors, the video signals read from the random-access memory (rm) are fed to a compensating stage (ks) which, in turn, drives the picture tube (br) via digital-to-analog converters (dw),
   characterized by the following features:
   – The deflection processor generates deflection signals of such a kind that the picture information of the received signal is visible on the picture-tube screen (bs) during all movements of the cathode-ray beam;
   – the video signals are read from the random-access memory (rm) in the order of write-in (="forward") during the trace period, and in reverse order (="backward") during the retrace period;
   – the horizontal deflection signals are triangular signals whose frequency is equal to the input horizontal frequency, and the vertical deflection signals are sawtooth signals stepped line by line;
   – the random-access memory (rm) has two halves (rm1, rm2), each for the video signals of one of two successive lines;
   – during a horizontal trace period, the video signals stored in the first half (rm1) of the memory during the preceding horizontal retrace period are read out forward at the write-in rate;
   – during a horizontal retrace period, the video signals stored in the second half (rm2) of the memory during the preceding horizontal trace period are read out backward at the write-in rate, and
   – the second phase-locked loop is duplicated, one loop being provided for horizontal sweep and the other for horizontal retrace, and the flyback signal for each of the two loops being a signal derived from the switching delay of a transistor to be cut off on the reversal of the direction of deflection.

2. Digital circuit system for (color) television receivers with cathode-ray picture tubes (br)
   – comprising a deflection processor (ap) containing two phase-locked loops for generating deflection signals, the first of said phase-locked loops synchronizing with the transmitted horizontal synchronizing signal, and the second synchronizing with the flyback signal,
   – the video signal (fb), digitized by means of a clock signal, is written into a random-access memory (rm) capable of storing at least one line and/or at least field, and read therefrom in such a way that the individual pixels of the picture occupy those positions on the picture-tube screen (bs) which are intended at the transmitting end, both the write-in and the readout being performed under control of a memory controller (st), and
   – to correct picture-tube errors, the video signals read from the random-access memory (rm) are fed to a compensating stage (ks) which, in turn, drives the picture tube (br) via digital-to-analog converters (dw),
   characterized by the following features:
   – The deflection processor generates deflection signals of such a kind that the picture information of the received signal is visible on the picture-tube screen (bs) during all movements of the cathode-ray beam;
   – the video signals are read from the random-access memory (rm) in the order of write-in (= "forward") during the trace period, and in reverse order (= "backward") during the retrace period;
   – the horizontal deflection signals are triangular signals whose frequency is equal to the input horizontal frequency, and the vertical deflection signals are sawtooth signals stepped line by line;
   – the random-access memory (rm) has two halves (rm1, rm2), each for the video signals of one of two successive lines;
   – during a received odd line, the video signals stored in the first half (rm1) of the memory during the preceding line are read out forward and subsequently backward at twice the write-in rate;
   – during a received even line, the video signals stored in the second half (rm2) of the memory during the preceding line are read out forward and subsequently backward at twice the write-in rate, and
   – the second phase-locked loop is duplicated, one loop being provided for horizontal sweep and the other for horizontal retrace, and the flyback signal for each of the two loops being a signal derived from the switching delay of a transistor to be cut off on the reversal of the direction of deflection.

## Revendications

1. Système de circuit numérique pour des récepteurs de télévision (en couleurs) comportant des tubes cathodiques de reproduction d'images (br)
   – comportant un processeur de commande de déviation (ap), qui, pour la production de signaux de déviation, contient deux circuits de régulation de phase, dont le premier est synchronisé sur le signal synchrone horizontal émis et dont le second est synchronisé sur le signal de retour du spot,

- le signal vidéo (fb), numérisé au moyen d'un signal de cadence, est enregistré dans une mémoire à accès direct (rm) pour au moins une ligne et/ou au moins un trame sous le contrôle d'un dispositif de commande de mémoire (st) et est lu à partir de cette mémoire de telle sorte que les différents éléments d'image du contenu de l'image prennent les emplacements associés, qu'on observe côté émetteur, sur l'écran (bs) du tube de reproduction d'images, et

- les signaux numériques lus à partir de la mémoire à accès direct (rm) sont envoyés, pour la correction des défauts du tube de reproduction d'images, à un étage de compensation (ks), qui, pour sa part, commande le tube de reproduction d'images (br) par l'intermédiaire de convertisseurs numériques/analogiques (dw),

caractérisé par les caractéristiques suivantes:

- le processeur de commande de déviation produit des signaux de déviation tels que le contenu de l'image du signal de réception est visible dans tous les déplacements du faisceau cathodique sur l'écran (bs) du tube de reproduction d'images,

- la mémoire à accès direct (rm) est lue dans le même sens (= "direct") que la séquence d'enregistrement lors du balayage aller du spot et est lue dans le même sens ("rétrograde") que la séquence d'enregistrement, lors du balayage retour du spot,

- les signaux de déviation horizontale sont des signaux triangulaires, dont la fréquence est égale à la moitié de la fréquence horizontale d'entrée, et les signaux de déviation verticale sont des signaux en dents de scie étagés ligne par ligne,

- pendant un balayage aller horizontal du spot, les signaux vidéo mémorisés dans la première moitié (rm1) de la mémoire pendant le balayage retour horizontal précédent du spot, sont lus dans le sens direct à la fréquence d'enregistrement,

- pendant un balayage retour horizontal du spot, les signaux vidéo mémorisés dans la seconde moitié (rm2) de la mémoire pendant le balayage aller horizontal précédent du spot sont lus dans le sens rétrograde à la fréquence d'enregistrement, et

- le second circuit de régulation de phase est prévu en double, d'une part pour le balayage aller horizontal du spot et d'autre part pour le balayage retour horizontal du spot, un signal dérivé du retard de commutation d'un transistor devant être bloqué lors de l'inversion du sens de balayage, étant utilisé comme signal de retour du spot.

2. Système de circuit numérique pour des récepteurs de télévision (en couleurs) comportant des tubes cathodiques de reproduction d'images (br)

- comportant un processeur de commande de déviation (ap), qui, pour la production de signaux de déviation, contient deux circuits de régulation de phase, dont le premier est synchronisé sur le signal synchrone horizontal émis et dont le second est synchronisé sur le signal de retour du spot,

- le signal vidéo (fb), numérisé au moyen d'un signal de cadence, est enregistré dans une mémoire à accès direct (rm) pour au moins une ligne et/ou au moins un trame sous le contrôle d'un dispositif de commande de mémoire (st) et est lu à partir de cette mémoire de telle sorte que les différents éléments d'image du contenu de l'image prennent les emplacements associés, qu'on observe côté émetteur, sur l'écran (bs) du tube de reproduction d'images, et

- les signaux numériques lus à partir de la mémoire à accès direct (rm) sont envoyés, pour la correction des défauts du tube de reproduction d'images, à un étage de compensation (ks), qui, pour sa part, commande le tube de reproduction d'images (br) par l'intermédiaire de convertisseurs numériques/analogiques (dw),

caractérisé par les caractéristiques suivantes:

- le processeur de commande de déviation produit des signaux de déviation tels que le contenu de l'image du signal de réception est visible dans tous les déplacements du faisceau cathodique sur l'écran (bs) du tube de reproduction d'images,

- la mémoire à accès direct (rm) est lue dans le même sens (= "direct") que la séquence d'enregistrement lors du balayage aller du spot et est lue dans le même sens ("rétrograde") que la séquence d'enregistrement, lors du balayage retour du spot,

- les signaux de déviation horizontale sont des signaux triangulaires, dont la fréquence est égale à la fréquence horizontale d'entrée, et les signaux de déviation verticale sont des signaux en dents de scie étagés ligne par ligne,

- la mémoire à accès direct (rm) comporte deux moitiés (rm1, rm2) pour les signaux vidéo d'une ligne respective faisant partie de deux lignes successives,

- pendant une ligne impaire reçue, les signaux vidéo mémorisés dans la première moitié (rm1) de la mémoire pendant la ligne précédente sont lus dans le sens direct et ensuite dans le sens rétrograde respectivement avec une fréquence égale au double de la fréquence d'enregistrement,

- pendant une ligne paire reçue, les signaux vidéo mémorisés dans la seconde moitié (rm2) de la mémoire pendant la ligne précédente sont lus dans le sens direct, puis dans le sens rétrograde respectif avec une fréquence égale au double de la fréquence d'enregistrement, et

- le second circuit de régulation de phase est prévu en double, d'une part pour le balayage aller horizontal du spot et d'autre part pour le balayage retour horizontal du spot, un signal dérivé du retard de commutation d'un transistor devant être bloqué lors de l'inversion de la direction de balayage, étant utilisé comme signal de retour du spot.

Fig. 1

Fig. 2